# EUROPÄISCHE PATENTSCHRIFT

(11) **EP 3 334 634 B1**
(45) Veröffentlichungstag und Bekanntmachung des Hinweises auf die Patenterteilung: **27.01.2021**
(21) Anmeldenummer: 16766516.5
(22) Anmeldetag: 09.09.2016
(51) Int. Cl.: B61D 27/00

(54) **VERFAHREN ZUM BETREIBEN EINES FAHRZEUGS UND FAHRZEUG**
METHOD FOR OPERATING A VEHICLE, AND VEHICLE
PROCÉDÉ POUR FAIRE FONCTIONNER UN VÉHICULE, ET VÉHICULE CORRESPONDANT

(30) Priorität: 05.10.2015 DE 102015219157
(43) Veröffentlichungstag der Anmeldung: 20.06.2018
(73) Patentinhaber: Siemens Mobility GmbH, 81739 München (DE)
(72) Erfinder: KASAP, Irfan, 44653 Herne (DE); RÜTER, Arnd, 47802 Krefeld (DE); BECKER, Susanne, 47802 Krefeld (DE); KEMMERLING, Frank, 41472 Neuss (DE); KIESEL, Michael, 50858 Köln (DE); MEYER, Gerd, 51375 Leverkusen (DE); RUITER, Timothy, 40235 Düsseldorf (DE); TAYLAN, Yüksel, 47551 Bedburg-Hau (DE)
(86) Internationale Anmeldenummer: PCT/EP2016/071258
(87) Internationale Veröffentlichungsnummer: WO 2017/060032

(56) Entgegenhaltungen:
- EP-A2- 0 841 201
- DE-A1-102009 025 299
- FR-A1- 2 398 629
- FR-A1- 2 434 722
- GB-A- 637 699

## Beschreibung

Die Erfindung betrifft ein Verfahren zum Betreiben eines Fahrzeugs, umfassend ein Kühlsystem mit einem Kühlmittelkanal, der eine Kühlmitteleinlassöffnung und eine Kühlmittelauslassöffnung aufweist, nach dem Oberbegriff von Anspruch 1.

Ein solches Verfahren ist beispielsweise aus der FR-A-2 434 722 oder der GB-A-637 699 bekannt.

Fahrzeuge, insbesondere Schienenfahrzeuge, sind oftmals mit einem Kühlsystem ausgestattet, welches einen Kühlmittelkanal mit einer Kühlmitteleinlassöffnung und einer Kühlmittelauslassöffnung aufweist. Solch ein Kühlsystem eines Fahrzeugs kann unter anderem zum Kühlen elektrischer und/oder mechanischer Komponenten und/oder eines Fahrgastraums des Fahrzeugs eingesetzt werden. Üblicherweise wird dabei Umgebungsluft als Kühlmittel verwendet, wobei die Luft mithilfe eines Lüfters durch den Kühlmittelkanal des Kühlsystems gefördert wird.

Wird die Luft durch den Kühlmittelkanal gefördert, während das Fahrzeug fährt, so wird die Luft vom Fahrzeug mitbeschleunigt, was einen Impulsverlust des Fahrzeugs bewirkt. Typischerweise wird, um einen solchen Impulsverlust zu kompensieren, eine Traktionsleistung des Fahrzeugs erhöht, was wiederum einen hohen Energieverbrauch des Fahrzeugs und somit hohe Kosten zur Folge hat. Da der Impulsverlust mit steigender Fahrtgeschwindigkeit des Fahrzeugs zunimmt, wirkt er sich umso stärker auf den Energieverbrauch des Fahrzeugs aus, je höher die Fahrtgeschwindigkeit des Fahrzeugs ist. Daher ist solch ein Impulsverlust insbesondere bei Hochgeschwindigkeitszügen von großer Bedeutung.

Eine Aufgabe der Erfindung ist es, ein Verfahren anzugeben, mit welchem ein Fahrzeug, das solch ein Kühlsystem aufweist, energieeffizient betrieben werden kann.

Diese Aufgabe wird bei dem eingangs genannten Verfahren durch die kennzeichnenden Merkmale des Anspruchs 1 gelöst.

Die Erfindung geht von der Überlegung aus, dass ein passives Einströmen eines Kühlmittels, insbesondere von Kühlluft, in den Kühlmittelkanal, z.B. aufgrund von temporären oder dauerhaften Druckdifferenzen an der Kühlmitteleinlass- und/oder an der Kühlmittelauslassöffnung, zum Luftwiderstand des Fahrzeugs beitragen kann. Außerdem kann eine turbulente Umströmung der Kühlmitteleinlass- und/oder der Kühlmittelauslassöffnung zum Luftwiderstand des Fahrzeugs beitragen. Folglich können die Kühlmitteleinlass- und/oder die Kühlmittelauslassöffnung jeweils eine den Luftwiderstand des Fahrzeugs beeinflussende Störgeometrie darstellen.

Auch wenn das Kühlsystem außer Betrieb ist bzw. die Kühlleistung des Kühlsystems Null ist und folglich keine aktive Förderung des Kühlmittels durch den Kühlmittelkanal erfolgt, liefern das passive Einströmen des Kühlmittels sowie die turbulente Umströmung der Kühlmitteleinlass- und/oder der Kühlmittelauslassöffnung (vermeidbare) Beiträge zum Luftwiderstand des Fahrzeugs.

Mithilfe der Schließeinrichtung kann der effektive Öffnungsquerschnitt der Kühlmitteleinlassöffnung bzw. der effektive Öffnungsquerschnitt der Kühlmittauslassöffnung in Abhängigkeit von der Kühlleistung des Kühlsystems verändert werden.

Wird das Kühlsystem während der Fahrt des Schienenfahrzeugs außer Betrieb gesetzt, d.h. die Kühlleistung des Kühlsystems auf Null gesetzt, kann mithilfe der Schließeinrichtung der effektive Öffnungsquerschnitt der Kühlmitteleinlassöffnung bzw. der effektive Öffnungsquerschnitt der Kühlmittelauslassöffnung z.B. soweit verringert werden, dass die Kühlmitteleinlass- bzw. die Kühlmittelauslassöffnung verschlossen wird. Dadurch kann ein passives Einströmen des Kühlmittels in den Kühlmittelkanal und/oder eine turbulente Umströmung der Kühlmitteleinlass-/Kühlmittelauslassöffnung vermieden oder zumindest reduziert werden. Folglich kann der Luftwiderstand des Fahrzeugs reduziert werden. Dies wiederum ermöglicht einen energieeffizienten Fahrbetrieb des Fahrzeugs.

Wird das Kühlsystem (erneut) in Betrieb genommen, kann mithilfe der Schließeinrichtung der effektive Öffnungsquerschnitt der Kühlmitteleinlassöffnung bzw. der effektive Öffnungsquerschnitt der Kühlmittelauslassöffnung (wieder) vergrößert werden, sodass das Kühlmittel den Kühlmittelkanal durchströmen kann.

Zweckmäßigerweise ist der effektive Öffnungsquerschnitt von der Stellung der Schließeinrichtung abhängig oder, anders ausgedrückt, definiert die Stellung der Schließeinrichtung zweckmäßigerweise den effektiven Öffnungsquerschnitt. Die Stellung der Schließeinrichtung wiederum ist zweckmäßigerweise durch eine bestimmte räumliche Ausrichtung und/oder eine bestimmte Position ihrer Elemente definiert. In bevorzugter Weise ist die Stellung der Schließeinrichtung bzw. ihrer Elemente kontinuierlich einstellbar.

Weiterhin ist es zweckmäßig, wenn der effektive Öffnungsquerschnitt umso mehr zunimmt, je weiter die Schließeinrichtung geöffnet wird, und in entsprechender Weise umso mehr abnimmt, je weiter die Schließeinrichtung verschlossen wird.

Das Verfahren kann insbesondere ein Verfahren zum Betreiben eines Schienenfahrzeugs sein. Das heißt, das Fahrzeug kann ein Schienenfahrzeug sein. Alternativ ist es möglich, dass es sich bei dem Fahrzeug um eine andere Art von Fahrzeug, beispielsweise um einen Omnibus, handelt.

Als Kühlleistung des Kühlsystems kann die vom Kühlsystem, insbesondere von einem Wärmeübertrager des Kühlsystems, pro Zeiteinheit von einer zu kühlenden Vorrichtung bzw. von einem zu kühlenden System des Fahrzeugs abgeführte Wärmeenergie aufgefasst werden.

Weiter kann als effektiver Öffnungsquerschnitt im Sinne der Erfindung ein nicht durch die Schließeinrichtung verdeckter Teil der Kühlmitteleinlass- bzw. Kühlmittelauslassöffnung aufgefasst werden, insbesondere bei frontaler Betrachtung der Kühlmitteleinlass- bzw. Kühlmittelauslassöffnung.

Das Kühlsystem kann unter anderem ein Bestandteil einer Klimaanlage sein. Weiter kann das Kühlsystem zum Kühlen mechanischer und/oder elektrischer Komponenten des Fahrzeugs, insbesondere zum Kühlen von Leistungselektronik, und/oder zum Kühlen eines Fahrgastraums des Fahrzeugs vorgesehen sein.

Es ist zweckmäßig, wenn das Kühlsystem einen Lüfter, insbesondere einen im Kühlmittelkanal angeordneten Lüfter, aufweist. Als Lüfter kann eine fremd angetriebene Strömungsmaschine aufgefasst werden, die ein gasförmiges Medium fördern und/oder verdichten kann. Zweckmäßigerweise umfasst der Lüfter ein rotierbares Laufrad. Der Lüfter kann beispielsweise als Ventilator, Gebläse oder Verdichter ausgebildet sein. Ferner kann der Lüfter insbesondere ein Axial-, ein Diagonal- oder ein Radiallüfter.

Vorzugsweise nimmt der effektive Öffnungsquerschnitt im Falle einer Erhöhung einer Lüfterleistung zu. Weiter ist es bevorzugt, wenn der effektive Öffnungsquerschnitt im Falle einer Verringerung der Lüfterleistung abnimmt. Als Lüfterleistung kann dabei die mechanische Leistung des Lüfters verstanden werden, welche zweckmäßigerweise zu einer Rotation des Laufrads und zu einer Strömung des Kühlmittels durch den Kühlmittelkanal führt. Der Lüfter kann beispielsweise derart ausgebildet sein, dass seine Lüfterleistung stufenweise veränderlich ist. Alternativ kann der Lüfter derart ausgebildet sein, dass seine Lüfterleistung kontinuierlich veränderlich ist.

Sinnvollerweise hängt die Kühlleistung des Kühlsystems von der Lüfterleistung ab. Wird die Lüfterleistung erhöht, so erhöht sich vorzugsweise die Kühlleistung. Wird Lüfterleistung dagegen reduziert, so verringert sich die Kühlleistung bevorzugterweise. Das heißt, letztlich wird der effektive Öffnungsquerschnitt vorzugsweise in Abhängigkeit von der Lüfterleistung verändert.

Die Schließeinrichtung ist vorteilhafterweise derart ausgestaltet, dass die Schließeinrichtung teilweise geöffnet ist, wenn der Lüfter in Betrieb ist, jedoch nicht bei seiner maximalen Lüfterleistung betrieben wird.

Weiter kann die Schließeinrichtung derart ausgestaltet sein, dass die Schließeinrichtung auch dann noch teilweise geöffnet ist, wenn der Lüfter bei seiner maximalen Lüfterleistung betrieben wird. Alternativ kann vorgesehen sein, dass die Schließeinrichtung vollständig geöffnet ist, wenn der Lüfter bei seiner maximalen Lüfterleistung betrieben wird.

Bei einer vorgegebenen Lüfterleistung hat ein kleinerer effektiver Öffnungsquerschnitt im Vergleich zu einem größeren effektiven Öffnungsquerschnitt den Vorteil, dass eine höhere Einströmgeschwindigkeit einer in den Kühlmittelkanal einströmenden laminaren Kühlmittelströmung an der Kühlmitteleinlassöffnung bzw. eine höhere Ausströmgeschwindigkeit einer aus dem Kühlmittelkanal ausströmenden laminaren Kühlmittelströmung an der Kühlmittelauslassöffnung erreicht werden kann. Dadurch wiederum kann eine turbulente Umströmung der Kühlmitteleinlass- bzw. Kühlmittelauslassöffnung abgeschwächt werden.

In bevorzugter Weise wird durch ein Abschalten des Lüfters die Schließeinrichtung in eine Stellung gebracht, bei der ein Einströmen des Kühlmittels in den Kühlmittelkanal durch besagte Öffnung (d.h. die Öffnung des Kühlmittelkanals, deren effektiver Öffnungsquerschnitt mithilfe der Schließeinrichtung verändert wird) und/oder ein Ausströmen des Kühlmittels aus dem Kühlmittelkanal durch besagte Öffnung unterbunden wird. Zweckmäßigerweise wird die Schließeinrichtung hierbei verschlossen.

In einer vorteilhaften Ausgestaltung der Erfindung wird die Stellung der Schließeinrichtung unter Verwendung eines Druckunterschieds eingestellt. Das heißt, die Schließeinrichtung kann eine druckbetriebene Schließeinrichtung sein. Vorzugsweise handelt es sich bei dem Druckunterschied um einen Druckunterschied zwischen einem im Kühlmittelkanal herrschenden ersten Druck, der von einer Lüfterleistung, insbesondere von der Lüfterleistung des zuvor erwähnten Lüfters, abhängig ist, und einem zweiten Druck. Dadurch, dass die Stellung der Schließeinrichtung unter Verwendung des Druckunterschieds eingestellt wird, kann auf die Verwendung eines teuren und wartungsintensiven Stellmotors zum Einstellen der Stellung der Schließeinrichtung verzichtet werden.

Der erste Druck ist vorteilhafterweise kleiner oder größer als ein Umgebungsdruck, d.h. kleiner oder größer als ein Druck in einer Umgebung des Fahrzeugs. Der Umgebungsdruck kann insbesondere einem atmosphärischen Druck entsprechen.

Erhöht sich besagter Druckunterschied, wird vorzugsweise der effektive Öffnungsquerschnitt vergrößert bzw. die Schließeinrichtung (weiter) geöffnet. Nimmt besagter Druckunterschied hingegen ab, wird vorzugsweise der effektive Öffnungsquerschnitt verkleinert bzw. die Schließeinrichtung (weiter) verschlossen. Zweckmäßigerweise erhöht sich der Druckunterschied, falls die Lüfterleistung erhöht wird. Wird dagegen die Lüfterleistung verringert, nimmt der Druckunterschied zweckmäßigerweise ab.

Der zweite Druck kann zum Beispiel ein anderer im Kühlmittelkanal herrschender Druck sein, welcher insbesondere von der Lüfterleistung abhängig ist. Alternativ kann der zweite Druck ein Druck außerhalb des Kühlmittelkanals sein. Im ersten Fall ist der zweite Druck vorzugsweise kleiner oder größer als der Umgebungsdruck. Im zweiten Fall ist der zweite Druck vorzugsweise gleich dem Umgebungsdruck oder im Wesentlichen gleich dem Umgebungsdruck.

Die Schließeinrichtung kann unter anderem eine Lamelleneinheit mit mehreren Lamellen umfassen bzw. als Lamelleneinheit mit mehreren Lamellen ausgestaltet sein. Der effektive Öffnungsquerschnitt hängt zweckmäßigerweise von einer Ausrichtung und/oder Position der Lamellen ab. Vorteilhafterweise wird der effektive Öffnungsquerschnitt durch eine Schwenkbewegung der Lamellen verändert. In bevorzugter Weise werden die Lamellen mithilfe einer Verstellmechanik, welche mit den Lamellen verbunden ist, gedreht bzw. geschwenkt, insbesondere wenn die Lüfterleistung verändert wird. Die Verstellmechanik kann beispielsweise eine Einstellfeder und/oder eine Hebeleinheit umfassen.

Grundsätzlich können sich die Lamellen in den Kühlmittelkanal hineinbewegen oder aus dem Kühlmittelkanal herausbewegen, wenn der Lüfter in Betrieb genommen wird. Bewegen sich die Lamellen in den Kühlmittelkanal hinein, hat dies den Vorteil, dass die Lamellen nicht von einer Außenhaut des Fahrzeugs abstehen und somit ein geringerer Luftwiderstand des Fahrzeugs erreicht werden kann, als wenn die Lamellen sich aus dem Kühlmittelkanal herausbewegen.

Weiterhin kann die Schließeinrichtung eine Schiebegittereinheit mit einem feststehenden Gitter und einem beweglichen Gitter umfassen bzw. als Schiebegittereinheit mit einem feststehenden Gitter und einem beweglichen Gitter ausgestaltet sein. Der effektive Öffnungsquerschnitt hängt zweckmäßigerweise von einer Position des beweglichen Gitters relativ zum feststehenden Gitter ab. Vorteilhafterweise wird der effektive Öffnungsquerschnitt verändert, indem das bewegliche Gitter relativ zum feststehenden Gitter verschoben wird. Das bewegliche Gitter wird vorzugsweise mithilfe einer Verstellmechanik, die mit dem beweglichen Gitter verbunden ist, verschoben, insbesondere wenn die Lüfterleistung verändert wird. Diese Verstellmechanik kann unter anderem eine Einstellfeder und/oder eine Hebeleinheit umfassen.

In bevorzugter Weise wird mithilfe der Schließeinrichtung der effektive Öffnungsquerschnitt der Kühlmitteleinlassöffnung verändert. Das Kühlsystem weist eine weitere Schließeinrichtung auf. Mittels dieser weiteren Schließeinrichtung kann z.B. während der Fahrt des Fahrzeugs ein effektiver Öffnungsquerschnitt der Kühlmittelauslassöffnung in Abhängigkeit von der Kühlleistung des Kühlsystems verändert werden.

Ferner betrifft die Erfindung ein Fahrzeug, umfassend ein Kühlsystem mit einem Kühlmittelkanal, der eine Kühlmitteleinlassöffnung und eine Kühlmittelauslassöffnung aufweist, nach Anspruch 8.

Beim erfindungsgemäßen Fahrzeug ist vorgesehen, dass das Kühlsystem eine Schließeinrichtung umfasst, welche dazu eingerichtet ist, einen effektiven Öffnungsquerschnitt einer der Öffnungen des Kühlmittelkanals in Abhängigkeit von einer Kühlleistung des Kühlsystems zu verändern.

Dieses Fahrzeug kann insbesondere das zuvor im Zusammenhang mit dem Verfahren erwähnte Fahrzeug sein. Das heißt, einzelne oder alle der zuvor erwähnten gegenständlichen Elemente können Elemente dieses Fahrzeugs sein. Umgekehrt kann das zuvor beschriebene Verfahren zum Betreiben dieses Fahrzeugs eingesetzt werden.

Das Fahrzeug kann z.B. ein Omnibus sein. Vorzugsweise ist das Fahrzeug ein Schienenfahrzeug, insbesondere ein Wagen eines Hochgeschwindigkeitszugs.

Weiter ist es bevorzugt, wenn das Kühlsystem des Fahrzeugs oberhalb eines Fahrgastraums des Fahrzeugs angeordnet ist. Das Kühlsystem kann z.B. in einem Dachbereich des Fahrzeugs angeordnet sein. Die Kühlmitteleinlassöffnung kann insbesondere im Bereich einer Dachvoute des Fahrzeugs angeordnet sein. Die Kühlmittelauslassöffnung kann beispielsweise an einem Dachscheitel des Fahrzeugs angeordnet sein. Unter einer Dachvoute kann ein gewölbter Übergang von einem Dach des Fahrzeugs zu einer Seitenwand des Fahrzeugs verstanden werden. Ferner kann als Dachscheitel der oberste Bereich des Dachs aufgefasst werden.

Der Kühlmittelkanal des Kühlsystems kann mehrere Kanalabschnitte aufweisen. Beispielsweise kann der Kühlmittelkanal einen horizontal ausgerichteten Kanalabschnitt sowie einen mit dem horizontalen Kanalabschnitt verbundenen vertikalen Kanalabschnitt aufweisen.

Gemäß einer vorteilhaften Ausgestaltung der Erfindung umfasst die Schließeinrichtung eine Lamelleneinheit bzw. ist als Lamelleneinheit ausgestaltet. Zweckmäßigerweise umfasst die Lamelleneinheit mehrere Lamellen, insbesondere mehrere drehbar bzw. schwenkbar gelagerte Lamellen. Vorzugsweise sind die Lamellen zueinander parallel angeordnet. In bevorzugter Weise sind die Lamellen jeweils um eine Drehachse, welche parallel zu einer Längskante der jeweiligen Lamelle ausgerichtet ist, rotierbar bzw. schwenkbar gelagert. Die jeweilige Drehachse kann entlang einer Längskante der jeweiligen Lamelle verlaufen. Alternativ kann die jeweilige Drehachse von den Längskanten der jeweiligen Lamelle beabstandet sein und insbesondere mittig entlang der jeweiligen Lamelle verlaufen. Alternativ oder zusätzlich zu den Lamellen kann die Schließeinrichtung eine Klappe, insbesondere eine rotierbar bzw. schwenkbar gelagerte Klappe, aufweisen.

Gemäß einer weiteren vorteilhaften Ausgestaltung der Erfindung umfasst die Schließeinrichtung eine Schiebegittereinheit bzw. ist als Schiebegittereinheit ausgestaltet. Die Schiebegittereinheit umfasst zweckmäßigerweise ein feststehendes Gitter. Weiter ist es zweckmäßig, wenn die Schiebegittereinheit ein bewegliches Gitter umfasst. Vorzugsweise ist das bewegliche Gitter relativ zum feststehenden Gitter beweglich gelagert. Alternativ oder zusätzlich zu dem beweglichen Gitter kann die Schließeinrichtung eine bewegliche Klappe aufweisen.

Besonders bevorzugt ist es, wenn das bewegliche Gitter senkrecht zu einer Kühlmittelführungsrichtung des Kühlmittelkanals, insbesondere senkrecht zu einer Kühlmittelführungsrichtung im Bereich der Kühlmitteleinlass- oder der Kühlmittelauslassöffnung, beweglich bzw. verschiebbar ist. Solch eine Anordnung ermöglicht eine druckkraftneutrale Lagerung der Gitter. Eine Neigung der Gitter zum Flattern, beispielsweise aufgrund von Druckschwankungen außerhalb des Fahrzeugs, kann dadurch reduziert werden.

Zweckmäßigerweise umfasst das Kühlsystem einen Lüfter. Weiter ist es vorteilhaft, wenn das Kühlsystem einen Wärmeübertrager, insbesondere einen luftgekühlten Wärmeübertrager, aufweist. Der Lüfter und/oder der Wärmeübertrager sind/ist zweckmäßigerweise im Kühlmittelkanal angeordnet.

In einer vorteilhaften Weiterbildung der Erfindung weist das Kühlsystem eine Einstellfeder, insbesondere eine mit der Schließeinrichtung verbundene Einstellfeder, auf. Die Einstellfeder stellt ein kostengünstiges Mittel zum Einstellen des effektiven Öffnungsquerschnitts dar. Eine Stellung der Schließeinrichtung ist zweckmäßigerweise von einer Ausdehnung der Einstellfeder abhängig. Die Ausdehnung der Einstellfeder wiederum ist zweckmäßigerweise von der Lüfterleistung abhängig. Vorzugsweise nutzt die Einstellfeder zum Verändern der Stellung der Schließeinrichtung einen Druckunterschied zwischen einem Umgebungsdruck, d.h. einem Druck in der Umgebung des Fahrzeugs, und einem Druck im Kühlmittelkanal.

Außerdem ist es vorteilhaft, wenn das Kühlsystem eine Dämpfungsvorrichtung, insbesondere eine mit der Schließeinrichtung verbundene Dämpfungsvorrichtung, aufweist. Bei der Dämpfungsvorrichtung kann es sich z.B. um einen Öl-/Luftdämpfer handeln. Die Dämpfungsvorrichtung kann insbesondere dazu verwendet werden, eine Trägheit der Schließeinrichtung bzw. ihrer Elemente zu erhöhen. Auf diese Weise kann ein Flattern der Schließeinrichtung bzw. ihrer Elemente im Falle einer plötzlich auftretenden Druckschwankung außerhalb des Fahrzeugs, z.B. bei einer Tunnelein-/Tunnelausfahrt des Fahrzeugs oder bei einer Vorbeifahrt eines anderen Fahrzeugs, vermieden oder zumindest reduziert werden.

In einer anderen vorteilhaften Weiterbildung der Erfindung weist das Kühlsystem eine Hebeleinheit auf. Die Hebeleinheit kann unter anderem einen Hebelarm aufweisen. Weiter kann die Hebeleinheit einen Kühlmittelzylinder aufweisen. Der Hebelarm kann z.B. abschnittsweise im Kühlmittelzylinder angeordnet sein. In bevorzugter Weise ist die Stellung der Schließeinrichtung von einer Stellung des Hebelarms abhängig.

Im Kühlmittelzylinder kann weiterhin eine Feder angeordnet sein. Ferner kann im Kühlmittelzylinder ein Kolben, insbesondere ein mit dem Hebelarm verbundener Kolben, angeordnet sein. Zweckmäßigerweise wirkt eine Federkraft der Feder auf den Kolben. Weiter ist es zweckmäßig, wenn der Kühlmittelzylinder durch mindestens eine Kühlmittelleitung, vorzugsweise durch zwei Kühlmittelleitungen, mit dem Kühlmittelkanal verbunden ist.

Vorteilhafterweise umfasst der Kühlmittelzylinder eine erste Kammer und eine zweite Kammer. Der Kolben grenzt die beiden Kammern vorzugsweise voneinander ab. Die erste Kammer kann durch eine erste Kühlmittelleitung mit einem ersten Kanalabschnitt des Kühlmittelkanals verbunden sein. Außerdem kann die zweite Kammer durch eine zweite Kühlmittelleitung mit einem zweiten Kanalabschnitt des Kanalabschnitts verbunden sein. Zweckmäßigerweise sind die Kühlmittelleitungen dazu vorgesehen, einen Druckausgleich zwischen der jeweiligen Kammer und dem mit der jeweiligen Kammer verbundenen Kanalabschnitt herzustellen. Eine Druckerhöhung im ersten Kanalabschnitt kann zu einer Druckerhöhung in der ersten Kammer des Kühlmittelzylinders führen. Weiter kann eine Druckabsenkung im ersten Kanalabschnitt zu einer Druckabsenkung in der ersten Kammer führen. Entsprechendes gilt zweckmäßigerweise für den zweiten Kanalabschnitt und die zweite Kammer des Kühlmittelzylinders.

Vorzugsweise nutzt die Hebeleinheit zum Verändern der Stellung der Schließeinrichtung einen Druckunterschied zwischen einem Überdruck im Kühlmittelkanal, insbesondere im Bereich des Lüfters, und einem Unterdruck im Kühlmittelkanal, insbesondere im Bereich des Lüfters.

Die Kühlmittelleitungen weisen vorteilhafterweise einen kleinen Innendurchmesser auf - im Vergleich zu einem Innendurchmesser des Kühlmittelzylinders. Dadurch kann eine hohe Trägheit der Hebeleinheit erreicht werden. Dies wiederum ermöglicht es, ein Flattern der Elemente der Schließeinrichtung, beispielsweise bei plötzlich auftretenden Druckschwankungen außerhalb des Fahrzeugs, zu reduzieren.

Alternativ oder zusätzlich zu dem Kühlmittelzylinder kann die Hebeleinheit z.B. einen Kühlmittelbalg, insbesondere einen mit dem Hebelarm verbundenen Kühlmittelbalg, umfassen. Der Kühlmittelbalg ist vorzugsweise dazu eingerichtet, eine Kraft auf den Hebelarm auszuüben. Hierzu kann der Kühlmittelbalg einen Druck im Kühlmittelkanal nutzen. Weiterhin kann der Kühlmittelbalg dazu eingerichtet sein, sowohl einen Unterdruck im Kühlmittelkanal als auch einen Überdruck im Kühlmittelkanal zum Verändern der Stellung der Schließeinrichtung zu nutzen, beispielsweise indem der Kühlmittelbalg als Doppelbalg ausgestaltet ist.

Die Hebeleinheit kann derart ausgelegt sein, dass eine Kraft, welche die Hebeleinheit bei einem anfänglichen Öffnen der Schließeinrichtung (aus einem vollständig verschlossenen Zustand der Schließeinrichtung) auf die Schließeinrichtung ausübt, größer ist als eine Kraft, welche die die Hebeleinheit bei einem weiteren Öffnen der Schließeinrichtung (aus einem teilweise geöffneten Zustand der Schließeinrichtung) auf die Schließeinrichtung ausübt. Hierdurch kann z.B. erreicht werden, dass die Schließeinrichtung auch geöffnet werden kann, wenn sie in einem verschlossenen Zustand festgefroren ist.

Die Schließeinrichtung kann z.B. an der Kühlmitteleinlassöffnung oder an der Kühlmittelauslassöffnung angeordnet sein. In bevorzugter Weise ist die Schließeinrichtung an der Kühlmitteleinlassöffnung angeordnet. Es ist vorgesehen, dass das Kühlsystem eine weitere Schließeinrichtung aufweist, die insbesondere an der Kühlmittelauslassöffnung angeordnet ist.

Ferner kann der Kühlmittelkanal mindestens eine weitere Kühlmitteeinlassöffnung und/oder mindestens eine weitere Kühlmittelauslassöffnung aufweisen. Darüber hinaus kann das Kühlsystem eine zusätzliche Schließeinrichtung an einer solchen weiteren Öffnung des Kühlmittelkanals aufweisen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Fahrzeug kombinierbar. So sind Verfahrensmerkmale, gegenständlich formuliert, auch als Eigenschaft der entsprechenden Vorrichtungseinheit zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine Schnittdarstellung eines Schienenfahrzeugs, welches ein Kühlsystem mit mehreren Schließeinrichtungen aufweist, die jeweils als Lamelleneinheit ausgestaltet sind und mit einer Einstellfeder verbunden sind, in einem geschlossenen Zustand der Schließeinrichtungen;
- FIG 2: eine Schnittdarstellung des Schienenfahrzeugs aus FIG 1, in einem geöffneten Zustand der Schließeinrichtungen;
- FIG 3: eine Schnittdarstellung eines anderen Schienenfahrzeugs, welches ein Kühlsystem mit mehreren Schließeinrichtungen aufweist, die jeweils als Lamelleneinheit ausgestaltet sind und mit derselben Hebeleinheit verbunden sind, in einem geschlossenen Zustand der Schließeinrichtungen;
- FIG 4: eine Schnittdarstellung des Schienenfahrzeugs aus FIG 3, in einem geöffneten Zustand der Schließeinrichtungen;
- FIG 5: eine Schnittdarstellung einer alternativen Schließeinrichtung, die als Lamelleneinheit ausgestaltet ist und mittig gelagerte Lamellen aufweist; und
- FIG 6: eine Schnittdarstellung einer weiteren alternativen Schließeinrichtung, welche als Schiebegittereinheit ausgestaltet ist.

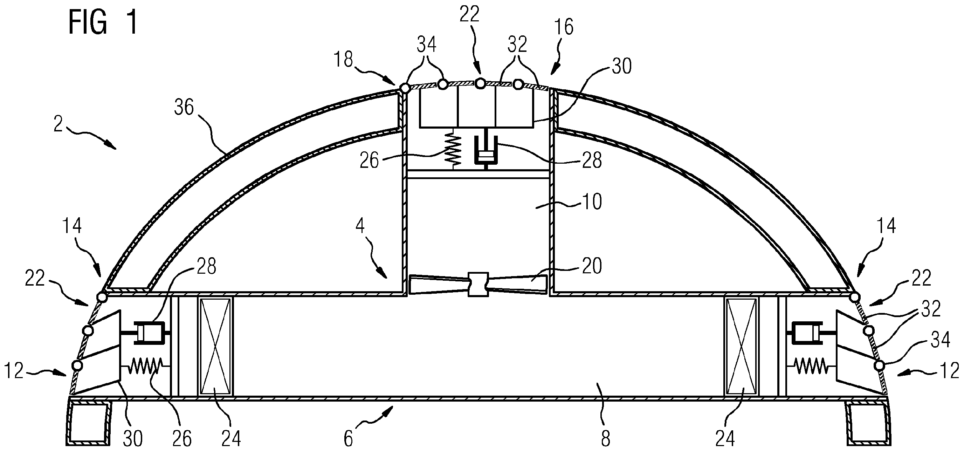

FIG 1 zeigt einen Abschnitt eines Schienenfahrzeugs 2 in einer schematischen Schnittdarstellung. In FIG 1 ist lediglich ein Dachbereich des Schienenfahrzeugs 2 dargestellt.

Das Schienenfahrzeug 2 weist ein Kühlsystem 4 auf, welches einen Kühlmittelkanal 6 mit einem horizontalen Kanalabschnitt 8 und einem mit dem horizontalen Kanalabschnitt 8 verbundenen vertikalen Kanalabschnitt 10 aufweist. Als Kühlmittel verwendet das Kühlsystem 4 Luft.

Der horizontale Kanalabschnitt 8 weist zwei Kühlmitteleinlassöffnungen 12 auf, die an gegenüberliegenden Seiten des Schienenfahrzeugs 2 jeweils im Bereich einer Dachvoute 14 angeordnet sind. Weiterhin weist der vertikale Kanalabschnitt 10 eine Kühlmittelauslassöffnung 16 auf, die im Bereich eines Dachscheitels 18 des Schienenfahrzeugs 2 angeordnet ist.

Darüber hinaus weist das Kühlsystem 4 einen Lüfter 20 auf, der im Kühlmittelkanal 6 im Bereich eines Übergangs vom horizontalen Kanalabschnitt 8 in den vertikalen Kanalabschnitt 10 angeordnet ist und dessen Lüfterleistung kontinuierlich oder stufenweise einstellbar ist. Im vorliegenden Ausführungsbeispiel ist der Lüfter 20 ein Axiallüfter. Weiterhin hängt die Lüfterleistung von einer Drehzahl des Lüfters 20 ab.

Ferner umfasst das Kühlsystem 4 drei Schließeinrichtungen 22, die im Kühlmittelkanal 6 angeordnet sind. Eine der drei Schließeinrichtungen 22 ist an der Kühlmittelauslassöffnung 16 angeordnet, wohingegen an den beiden Kühlmitteleinlassöffnungen 12 jeweils eine der beiden anderen Schließeinrichtungen 22 angeordnet ist.

Des Weiteren umfasst das Kühlsystem 4 zwei luftgekühlte Wärmeübertrager 24, die im horizontalen Kanalabschnitt 8 angeordnet sind und zur Kühlung eines Fahrgastraums des Schienenfahrzeugs 2 vorgesehen sind.

Außerdem umfasst das Kühlsystems 4 drei Einstellfedern 26 sowie drei Dämpfungsvorrichtungen 28. Jede der drei Schließeinrichtungen 22 ist über eine mechanische Kopplung 30, welche als Gestänge ausgestaltet ist, mit einer der drei Einstellfedern 26 sowie mit einer der drei Dämpfungsvorrichtungen 28 verbunden.

Im vorliegenden Ausführungsbeispiel sind die Schließeinrichtungen 22 jeweils als Lamelleneinheit mit mehreren drehbar bzw. schwenkbar gelagerten Lamellen 32 ausgestaltet, wobei alle Lamellen 32 der jeweiligen Schließeinrichtung 22 mit der zugehörigen mechanischen Kopplung 30 verbunden sind.

Eine Stellung der jeweiligen Schließeinrichtung 22, insbesondere eine Stellung ihrer Lamellen 32, hängt von einer Ausdehnung der mit der jeweiligen Schließeinrichtung 22 verbundenen Einstellfeder 26 ab, die wiederum von der Lüfterleistung des Lüfters 20 abhängig ist. Die Dämpfungsvorrichtungen 28 haben die Funktion, ein Flattern der Lamellen 32, beispielsweise bei plötzlich auftretenden Druckschwankungen außerhalb des Schienenfahrzeugs 2, zu reduzieren.

Des Weiteren ist jede der Lamellen 32 um eine Drehachse 34 rotierbar, die entlang einer Längskante der jeweiligen Lamelle 32 verläuft bzw. mit einer Längskante der jeweiligen Lamelle 32 zusammenfällt.

Mithilfe der an der Kühlmittelauslassöffnung 16 angeordneten Schließeinrichtung 22 kann ein effektiver Öffnungsquerschnitt der Kühlmittelauslassöffnung 16 in Abhängigkeit von einer Kühlleistung des Kühlsystems 4 verändert werden. Entsprechend kann mithilfe der an der Kühlmitteleinlassöffnungen 12 angeordneten Schließeinrichtungen 22 ein effektiver Öffnungsquerschnitt der jeweiligen Kühlmitteleinlassöffnung 12 in Abhängigkeit von einer Kühlleistung des Kühlsystems 4 verändert werden. Die effektiven Öffnungsquerschnitte können insbesondere während einer Fahrt des Schienenfahrzeugs 2 verändert werden und hängen jeweils von einer Stellung der an der jeweiligen Öffnung 12, 16 angeordneten Schließeinrichtung 22, insbesondere von einer Stellung ihrer Lamellen 32, ab.

Wenn die Lüfterleistung erhöht wird, nimmt der jeweilige effektive Öffnungsquerschnitt zu. Wird dagegen die Lüfterleistung verringert, nimmt der jeweilige effektive Öffnungsquerschnitt ab. Im Falle einer Erhöhung der Lüfterleistung werden die Lamellen 32 der an der Kühlmittelauslassöffnung 16 angeordneten Schließeinrichtung 22 (weiter) nach außen, d.h. aus dem Kühlmittelkanal 6 heraus, geschwenkt, während die Lamellen 32 der an der Kühlmitteleinlassöffnungen 12 angeordneten Schließeinrichtungen 22 (weiter) nach innen, d.h. in den Kühlmittelkanal 6 hinein, geschwenkt werden.

Wird keine Kühlleistung des Kühlsystems 4 benötigt wird, so wird der Lüfter 20 abgeschaltet bzw. außer Betrieb gesetzt. In diesem Zustand, der in FIG 1 dargestellt ist, herrscht im Kühlmittelkanal 6 derselbe Druck wie in einer Umgebung des Schienenfahrzeugs 2, also Umgebungsdruck. Die Schließeinrichtungen 22 befinden sich hierbei jeweils in einem geschlossenen Zustand. Dadurch wird ein Einströmen des Kühlmittels, also von Luft, in den Kühlmittelkanal 6 durch die beiden Kühlmitteleinlassöffnungen 12 sowie ein Ausströmen des Kühlmittels aus dem Kühlmittelkanal 6 durch die Kühlmittelauslassöffnung 16 unterbunden.

Ferner sind die Lamellen 32 der Schließeinrichtungen 22 derart geformt und angeordnet, dass die Lamellen 32 im geschlossenen Zustand der jeweiligen Schließeinrichtung 22 bündig mit einer Außenhaut 36 des Schienenfahrzeugs 2 abschließen.

Dadurch, dass die Schließeinrichtungen 22 geschlossen sind, wird eine Entstehung von Luftturbulenzen an den Kühlmitteleinlassöffnungen 12 sowie an der Kühlmittelauslassöffnung 16 während der Fahrt des Schienenfahrzeugs 2 vermieden bzw. reduziert. Ferner wird während der Fahrt ein Impulsverlust des Schienenfahrzeugs 2, welcher durch in den Kühlmittelkanal 6 einströmende Luft verursacht wird, vermieden.

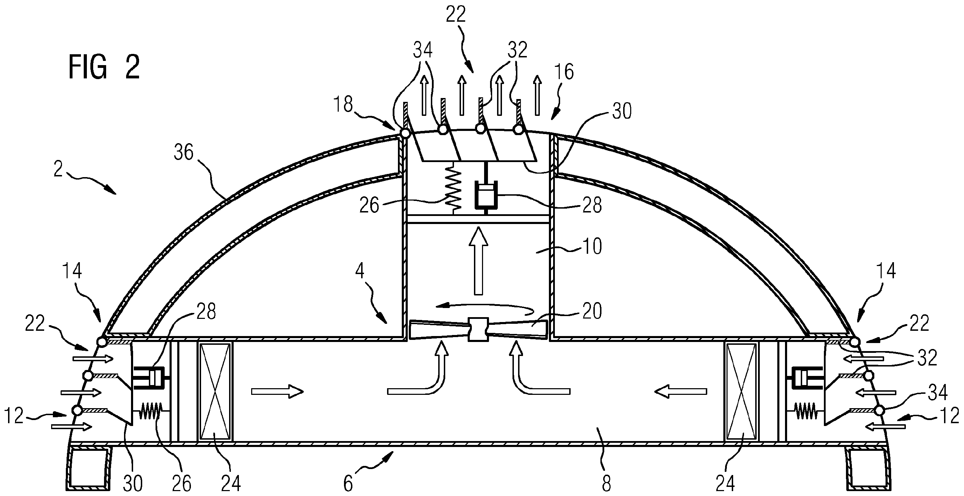

FIG 2 zeigt denselben Abschnitt des Schienenfahrzeugs 2, der bereits in FIG 1 dargestellt ist. Allerdings sind in FIG 2 die Schließeinrichtungen 22 in einem geöffneten Zustand dargestellt, da der Lüfter 20 in Betrieb ist. Insbesondere wird der Lüfter 20 bei seiner maximalen Lüfterleistung betrieben.

Der Lüfter 20 erzeugt im vertikalen Kanalabschnitt 10, d.h. druckseitig des Lüfters 20, einen Überdruck (bezüglich des Umgebungsdrucks) und im horizontalen Kanalabschnitt 8, d.h. saugseitig des Lüfters 20, einen Unterdruck (bezüglich des Umgebungsdrucks). Der Unter- und Überdruck treiben eine Luftströmung durch den Kühlmittelkanal 6 an. Zudem sind der Unter- und Überdruck von der Lüfterleistung abhängig.

Die Luft strömt durch die beiden Kühlmitteleinlassöffnungen 12 in den horizontalen Kanalabschnitt 8 ein, umströmt die beiden Wärmeübertrager 24 und kühlt dabei die Wärmeübertrager 24 ab. Weiter strömt die Luft am Lüfter 20 entlang in den vertikalen Kanalabschnitt 10 hinein und anschließend durch die Kühlmittelauslassöffnung 16 aus dem Kühlmittelkanal 6 heraus. In FIG 2 ist die Luftströmung symbolisch in Form von Pfeilen dargestellt.

Durch den Druckunterschied zwischen dem Umgebungsdruck und dem im horizontalen Kanalabschnitt 8 herrschenden Unterdruck werden die Einstellfedern 26, die mit den an den Kühlmitteleinlassöffnungen 12 angeordneten Schließeinrichtungen 22 verbunden sind, gestaucht. Dadurch werden die Lamellen 32 besagter Schließeinrichtungen 22 in den Kühlmittelkanal 6 hinein geschwenkt. Ferner wird durch den Druckunterschied zwischen dem Umgebungsdruck und dem im vertikalen Kanalabschnitt 10 herrschenden Überdruck die Einstellfeder 26, die mit dem an der Kühlmittelauslassöffnung 16 angeordneten Schließeinrichtung 22 verbunden ist, gestreckt. Hierdurch werden die Lamellen 32 letztgenannter Schließeinrichtung 22 aus dem Kühlmittelkanal 6 heraus geschwenkt.

Falls der Lüfter 20 abgeschaltet wird, werden die Schließeinrichtungen 22 mithilfe der Einstellfedern 26 wieder in eine geschlossene Stellung gebracht (vgl. FIG 1). Wird dagegen die Lüfterleistung reduziert, ohne dass der Lüfter 20 abgeschaltet wird, werden die Schließeinrichtungen 22 in eine teilweise geöffnete Stellung gebracht.

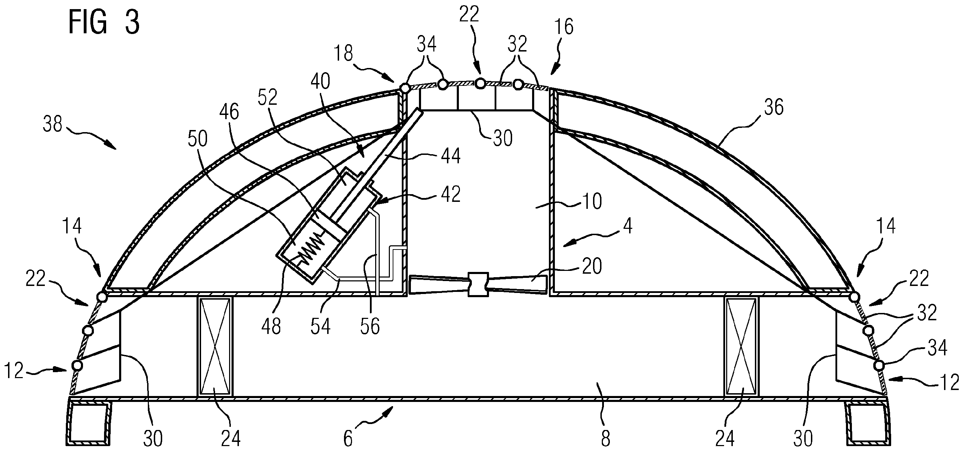

FIG 3 zeigt einen Abschnitt eines anderen Schienenfahrzeugs 38 in einer schematischen Schnittdarstellung.

Die Beschreibung des nachfolgenden Ausführungsbeispiels beschränkt sich primär auf die Unterschiede zum vorhergehenden, im Zusammenhang mit FIG 1 und FIG 2 beschriebenen Ausführungsbeispiel, auf das bezüglich gleichbleibender Merkmale und Funktionen verwiesen wird. Im Wesentlichen gleiche bzw. einander entsprechende Elemente sind, soweit zweckdienlich, mit den gleichen Bezugszeichen bezeichnet und nicht erwähnte Merkmale sind im nachfolgenden Ausführungsbeispiel übernommen, ohne dass sie erneut beschrieben sind.

In dem in FIG 3 dargestellten Zustand ist der Lüfter 20 des Schienenfahrzeugs 38 abgeschaltet bzw. außer Betrieb und die Schließeinrichtungen 22 befinden sich jeweils in einem geschlossenen Zustand.

Des Weiteren weist das Kühlsystem 4 des Schienenfahrzeugs 38 im vorliegenden Ausführungsbeispiel anstelle der drei Einstellfedern 26 und der drei Dämpfungsvorrichtungen 28 eine Hebeleinheit 40 auf. Die Hebeleinheit 40 umfasst einen Kühlmittelzylinder 42 sowie einen abschnittweise im Kühlmittelzylinder 42 angeordneten Hebelarm 44. Der Hebelarm 44 kann ein oder mehrere figürlich nicht dargestellte Gelenke aufweisen.

Weiter umfasst die Hebeleinheit 40 einen im Kühlmittelzylinder 42 angeordneten, starr mit dem Hebelarm 44 verbundenen Kolben 46 sowie eine im Kühlmittelzylinder 42 angeordnete Feder 48, deren Federkraft auf den Kolben 46 wirkt. Der Kühlmittelzylinder 42 weist eine erste Zylinderkammer 50 sowie eine zweite Zylinderkammer 52 auf, die durch den Kolben 46 voneinander getrennt sind, wobei die Feder 48 in der ersten Zylinderkammer 50 angeordnet ist.

Des Weiteren ist die erste Zylinderkammer 50 durch eine erste Kühlmittelleitung 54 mit dem vertikalen Kanalabschnitt 10 verbunden, wohingegen die zweite Zylinderkammer 52 durch eine zweite Kühlmittelleitung 56 mit dem horizontalen Kanalabschnitt 8 verbunden ist, wobei die beiden Kühlmittelleitungen 54, 56 jeweils im Bereich des Lüfters 20 in den Kühlmittelkanal 6 münden.

Die Schließeinrichtungen 22 sind jeweils über eine mechanische Kopplung 30, welche als Gestänge ausgestaltet ist, mit dem Hebelarm 44 verbunden. Die Stellung der jeweiligen Schließeinrichtung 22, insbesondere die Stellung ihrer Lamellen 32, hängt von einer Stellung des Hebelarms 44 ab.

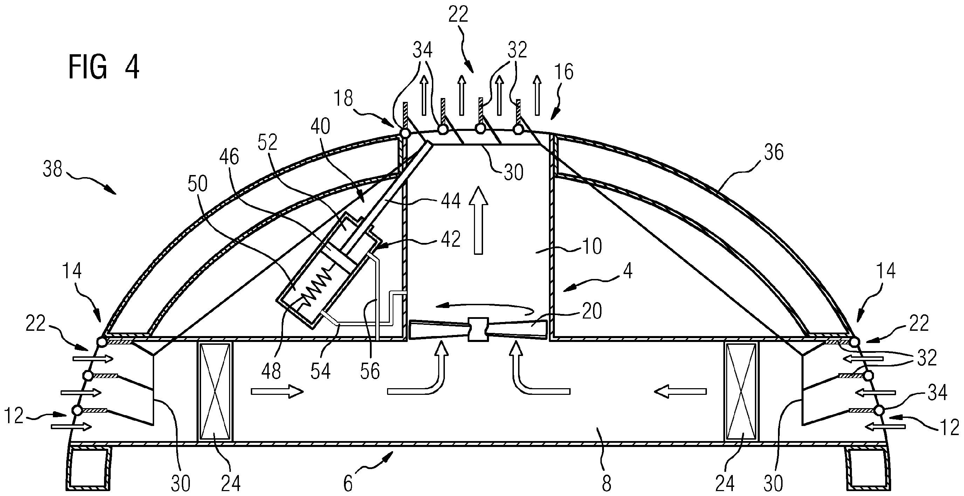

FIG 4 zeigt denselben Abschnitt des Schienenfahrzeugs 38, der bereits in FIG 3 dargestellt ist. Allerdings sind in FIG 4 die Schließeinrichtungen 22 in einem geöffneten Zustand dargestellt, da der Lüfter 20 in Betrieb ist. Insbesondere wird der Lüfter 20 bei seiner maximalen Lüfterleistung betrieben.

Der Lüfter 20 erzeugt im vertikalen Kanalabschnitt 10, d.h. druckseitig des Lüfters 20, einen Überdruck (bezüglich des Umgebungsdrucks) und im horizontalen Kanalabschnitt 8, d.h. saugseitig des Lüfters 20, einen Unterdruck (bezüglich des Umgebungsdrucks).

Über die erste Kühlmittelleitung 54 gleicht sich der Druck in der ersten Zylinderkammer 50 dem Überdruck im vertikalen Kanalabschnitt 10 (im Bereich des Lüfters 20) an. Entsprechend gleich sich der Druck in der zweiten Zylinderkammer 52 über die zweite Kühlmittelleitung 56 dem Unterdruck im horizontalen Kanalabschnitt 8 (im Bereich des Lüfters 20) an.

Der Kolben 46 verschiebt sich, bis sich am Kolben 46 ein Kräftegleichgewicht aus den Druckkräften, die auf den Kolben 46 wirken, und einer Federkraft, welche die Feder 48 auf den Kolben 46 ausübt, einstellt. Gemäß FIG 4 verschiebt sich der Kolben 46 nach oben, wenn die Lüfterleistung erhöht wird. Dabei verringert sich ein Volumen der zweiten Zylinderkammer 52, während sich ein Volumen der ersten Zylinderkammer 50 vergrößert. Zudem wird die Feder 48 gestreckt.

Durch die Verschiebung des Kolbens 46 verändert der Hebelarm 44 seine Stellung. Dadurch wiederum werden die Lamellen 32 der Schließeinrichtungen 22, die an den Kühlmitteleinlassöffnungen 12 angeordnet sind, in den Kühlmittelkanal 6 hinein geschwenkt. Die Lamellen 32 der Schließeinrichtungen 22, die an der Kühlmittelauslassöffnung 16 angeordnet sind, werden hingegen aus dem Kühlmittelkanal 6 heraus geschwenkt.

Falls der Lüfter 20 abgeschaltet wird, werden die Schließeinrichtungen 22 mithilfe der Hebeleinheit 40 wieder in eine geschlossene Stellung gebracht (vgl. FIG 3).

Grundsätzlich kann das Schienenfahrzeug 38 statt einer einzigen Hebeleinheit 40 mehrere Hebeleinheiten, insbesondere für jede Schließeinrichtung eine eigene Hebeleinheit, aufweisen.

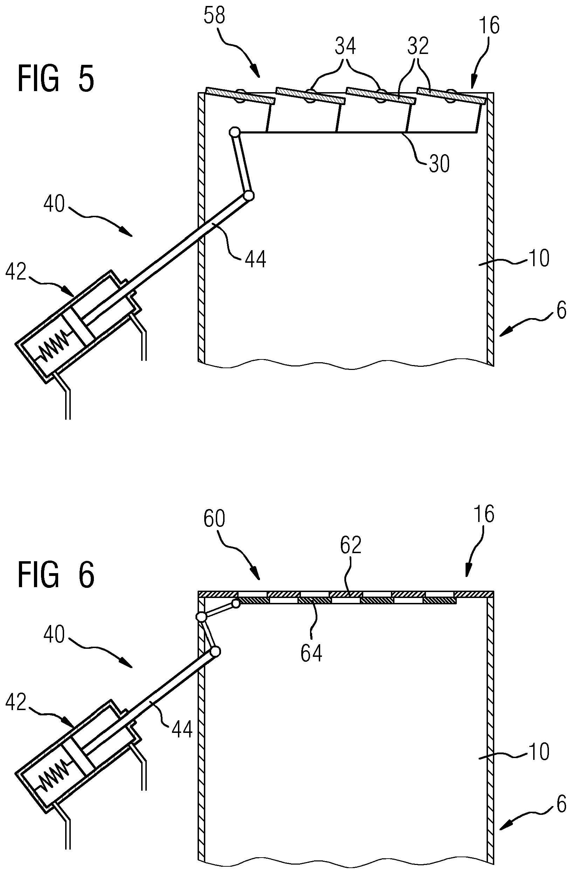

FIG 5 zeigt eine alternative Schließeinrichtung 58 in einer schematischen Schnittdarstellung. Exemplarisch ist diese Schließeinrichtung 58 an einer Kühlmittelauslassöffnung 16 eines vertikalen Kanalabschnitts 10 eines Kühlmittelkanals 6 angeordnet.

Die vorliegende Schließeinrichtung 58 ist als Lamelleneinheit mit mehreren drehbar bzw. schwenkbar gelagerten Lamellen 32 ausgestaltet. Anders als bei den zuvor erwähnten Schließeinrichtungen 22 (vgl. FIG 1 bis FIG 4) sind bei dieser Schließeinrichtung 58 die Lamellen 32 jeweils um eine Drehachse 34 rotierbar, welche mittig zwischen den Längskanten der jeweiligen Lamelle 32 verläuft. Das heißt, die Lamellen 32 sind mittig gelagert. Ein Vorteil dieser Art von Lagerung ist, dass sich Druckkräfte, die auf die unterschiedlichen Seiten der Lamellen 32 wirken, sich (im Wesentlichen) gegenseitig kompensieren können.

Weiterhin ist die Schließeinrichtung 58 über eine mechanische Kopplung 30 in Form eines Gestänges mit einer Hebeleinheit 40 verbunden, die einen Kühlmittelzylinder 42 sowie einen abschnittsweise im Kühlmittelzylinder 42 angeordneten Hebelarm 44 umfasst. Die Stellung der Schließeinrichtung 58 bzw. die Stellung ihrer Lamellen 32 ist von der Stellung des Hebelarms 44 abhängig.

Eine solche Schließeinrichtung 58 kann beim Schienenfahrzeug 2 aus FIG 1 und FIG 2 oder beim Schienenfahrzeug 38 aus FIG 3 und FIG 4 eine oder mehrere der zuvor erwähnten Schließeinrichtungen 22 ersetzen.

FIG 6 zeigt eine weitere alternative Schließeinrichtung 60 in einer schematischen Schnittdarstellung. Exemplarisch ist diese Schließeinrichtung 60 an einer Kühlmittelauslassöffnung 16 eines vertikalen Kanalabschnitts 10 eines Kühlmittelkanals 6 angeordnet.

Die vorliegende Schließeinrichtung 60 ist nicht als Lamelleneinheit, sondern als Schiebegittereinheit ausgestaltet. Sie umfasst ein feststehendes Gitter 62 sowie ein bewegliches Gitter 64, das relativ zum feststehenden Gitter 62 verschiebbar ist.

Des Weiteren ist diese Schließeinrichtung 60, insbesondere das bewegliche Gitter 64 der Schließeinrichtung 60, mit einer Hebeleinheit 40 verbunden, die einen Kühlmittelzylinder 42 sowie einen abschnittsweise im Kühlmittelzylinder 42 angeordneten Hebelarm 44 umfasst. Außerdem ist die Stellung der Schließeinrichtung 60 bzw. die Stellung des beweglichen Gitters 64 von der Stellung des Hebelarms 44 abhängig.

Eine solche Schließeinrichtung 60 kann beim Schienenfahrzeug 2 aus FIG 1 und FIG 2 oder beim Schienenfahrzeug 38 aus FIG 3 und FIG 4 eine oder mehrere der zuvor erwähnten Schließeinrichtungen 22 ersetzen.

Wird die vorliegende Schließeinrichtung 60 verwendet, so wird der jeweilige effektive Öffnungsquerschnitt verändert, indem das bewegliche Gitter 64 relativ zum feststehenden Gitter 62 verschoben wird.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können hieraus abgeleitet werden, ohne den Schutzumfang der Erfindung bzw. der Ansprüche zu verlassen.

## Patentansprüche

1. Verfahren zum Betreiben eines Fahrzeugs (2, 38), umfassend ein Kühlsystem (4) mit einem Kühlmittelkanal (6), der eine Kühlmitteleinlassöffnung (12) und eine Kühlmittelauslassöffnung (16) aufweist, wobei das Kühlsystem (4) eine Schließeinrichtung (22, 58, 60) aufweist und mithilfe der Schließeinrichtung (22, 58, 60) während einer Fahrt des Fahrzeugs (2, 38) ein effektiver Öffnungsquerschnitt einer der Öffnungen (12, 16) des Kühlmittelkanals (6) in Abhängigkeit von einer Kühlleistung des Kühlsystems (4) verändert wird, wobei der effektive Öffnungsquerschnitt, der mithilfe der Schließeinrichtung (22, 58, 60) verändert wird, ein effektiver Öffnungsquerschnitt der Kühlmitteleinlassöffnung (12 ist, **dadurch gekennzeichnet, dass** das Kühlsystem (4) eine weitere Schließeinrichtung (22, 58, 60) aufweist, mittels welcher während der Fahrt des Fahrzeugs (2, 38) ein effektiver Öffnungsquerschnitt der Kühlmittelauslassöffnung (16) in Abhängigkeit von der Kühlleistung des Kühlsystems (4) verändert wird..

2. Verfahren nach Anspruch 1,
**dadurch gekennzeichnet, dass** das Kühlsystem (4) einen im Kühlmittelkanal (6) angeordneten Lüfter (20) aufweist, wobei der effektive Öffnungsquerschnitt im Falle einer Erhöhung einer Lüfterleistung zunimmt und im Falle einer Verringerung der Lüfterleistung abnimmt.

3. Verfahren nach Anspruch 2,
**dadurch gekennzeichnet, dass** durch ein Abschalten des Lüfters (20) die Schließeinrichtung (22, 58, 60) in eine Stellung gebracht wird, bei der ein Einströmen eines Kühlmittels in den Kühlmittelkanal (6) durch besagte Öffnung (12, 16) und/oder ein Ausströmen des Kühlmittels aus dem Kühlmittelkanal (6) durch besagte Öffnung (12, 16) unterbunden wird.

4. Verfahren nach einem der vorhergehenden Ansprüche,
**dadurch gekennzeichnet, dass** der effektive Öffnungsquerschnitt von einer Stellung der Schließeinrichtung (22, 58, 60) abhängig ist, wobei die Stellung der Schließeinrichtung (22, 58, 60) unter Verwendung eines Druckunterschieds zwischen einem im Kühlmittelkanal (6) herrschenden ersten Druck, der von einer Lüfterleistung abhängig ist, und einem zweiten Druck eingestellt wird.

5. Verfahren nach Anspruch 4,
**dadurch gekennzeichnet, dass** der zweite Druck ein anderer im Kühlmittelkanal (6) herrschender Druck ist, der von der Lüfterleistung abhängig ist, oder dass der zweite Druck ein Druck außerhalb des Kühlmittelkanals (6) ist.

6. Verfahren nach einem der vorhergehenden Ansprüche,
**dadurch gekennzeichnet, dass** die Schließeinrichtung (22, 58, 60) als Lamelleneinheit mit mehreren Lamellen (32) ausgestaltet ist und der effektive Öffnungsquerschnitt durch eine Schwenkbewegung der Lamellen (32) verändert wird.

7. Verfahren nach einem der Ansprüche 1 bis 6,
**dadurch gekennzeichnet, dass** die Schließeinrichtung (22, 58, 60) als Schiebegittereinheit mit einem feststehenden Gitter (62) und einem beweglichen Gitter (64) ausgestaltet ist und der effektive Öffnungsquerschnitt verändert wird, indem das bewegliche Gitter (64) relativ zum feststehenden Gitter (62) verschoben wird.

8. Fahrzeug (2, 38), umfassend ein Kühlsystem (4) mit einem Kühlmittelkanal (6), der eine Kühlmitteleinlassöffnung (12) und eine Kühlmittelauslassöffnung (16) aufweist,
wobei das Kühlsystem (4) eine Schließeinrichtung (22, 58, 60) aufweist, welche dazu eingerichtet ist, einen effektiven Öffnungsquerschnitt einer der Öffnungen (12, 16) des Kühlmittelkanals (6) in Abhängigkeit von einer Kühlleistung des Kühlsystems (4) zu verändern, wobei die Schließeinrichtung (22, 58, 60) an der Kühlmitteleinlassöffnung (12) angeordnet ist, **dadurch gekennzeichnet, dass** das Kühlsystem (4) eine weitere Schließeinrichtung (22, 58, 60) aufweist, die an der Kühlmittelauslassöffnung (16) angeordnet ist.

9. Fahrzeug (2, 38) nach Anspruch 8,
**dadurch gekennzeichnet, dass** die Schließeinrichtung (22, 58, 60) als Lamelleneinheit mit mehreren drehbar gelagerten Lamellen (32) ausgestaltet ist.

10. Fahrzeug (2, 38) nach Anspruch 8,
**dadurch gekennzeichnet, dass** die Schließeinrichtung (22, 58, 60) als Schiebegittereinheit mit einem feststehenden Gitter (62) und einem beweglichen Gitter (64) ausgestaltet ist.

11. Fahrzeug (2, 38) nach einem der Ansprüche 8 bis 10, **dadurch gekennzeichnet, dass** das Kühlsystem (4) einen Lüfter (20) und einen luftgekühlten Wärmeübertrager (24) aufweist, die im Kühlmittelkanal (6) angeordnet sind.

12. Fahrzeug (2, 38) nach einem der Ansprüche 8 bis 11, **dadurch gekennzeichnet, dass** das Kühlsystem (4) eine Einstellfeder (26) und eine Dämpfungseinrichtung (28) aufweist, die jeweils mit der Schließeinrichtung (22, 58, 60) verbunden sind, wobei eine Stellung der Schließeinrichtung (22, 58, 60) von einer Ausdehnung der Einstellfeder (26) abhängig ist.

13. Fahrzeug (2, 38) nach einem der Ansprüche 8 bis 12,
**dadurch gekennzeichnet, dass** das Kühlsystem (4) eine Hebeleinheit (40) mit einem Hebelarm (44) und einem Kühlmittelzylinder (42) aufweist, wobei im Kühlmittelzylinder (42) ein mit dem Hebelarm (44) verbundener Kolben (46) angeordnet ist, der Kühlmittelzylinder (42) durch mindestens eine Kühlmittelleitung (54, 56) mit dem Kühlmittelkanal (6) verbunden ist und eine Stellung der Schließeinrichtung (22, 58, 60) von einer Stellung des Hebelarms (44) abhängig ist.

## Claims

1. Method for operating a vehicle (2, 38), comprising a cooling system (4) with a coolant channel (6), which has a coolant inlet opening (12) and a coolant outlet opening (16), wherein the cooling system (4) has a closing device (22, 58, 60) and, with the aid of the closing device (22, 58, 60), an effective opening cross section of one of the openings (12, 16) of the coolant channel (6) is modified during a journey of the vehicle (2, 38) in accordance with a cooling output of the cooling system (4), wherein the effective opening cross section that is modified with the aid of the closing device (22, 58, 60) is an opening cross section of the coolant inlet opening (12), **characterized in that** the cooling system (4) has a further closing device (22, 58, 60), by means of which an effective opening cross section of the coolant outlet opening (16) is modified during the journey of the vehicle (2, 38) in accordance with the cooling output of the cooling system (4).

2. Method according to Claim 1,
**characterized in that** the cooling system (4) has a fan (20) arranged in the coolant channel (6), wherein the effective opening cross section increases in the case of a raising of a fan output and decreases in the case of a lowering of the fan output.

3. Method according to Claim 2,
**characterized in that**, by switching off the fan (20), the closing device (22, 58, 60) is brought into a position in which an inflow of a coolant into the coolant channel (6) through said opening (12, 16) and/or an outflow of the coolant from the coolant channel (6) through said opening (12, 16) is prevented.

4. Method according to one of the preceding claims,
**characterized in that** the effective opening cross section is dependent on a position of the closing device (22, 58, 60), wherein the position of the closing device (22, 58, 60) is set by using a pressure difference between a first pressure prevailing in the coolant channel (6), which is dependent on a fan output, and a second pressure.

5. Method according to Claim 4,
**characterized in that** the second pressure is another pressure prevailing in the coolant channel (6), which is dependent on the fan output, or **in that** the second pressure is a pressure outside the coolant channel (6).

6. Method according to one of the preceding claims,
**characterized in that** the closing device (22, 58, 60) is designed as a louvre unit with multiple louvres (32) and the effective opening cross section is modified by a pivoting movement of the louvres (32).

7. Method according to one of Claims 1 to 6,
**characterized in that** the closing device (22, 58, 60) is designed as a sliding grille unit with a fixed grille (62) and a movable grille (64) and the effective opening cross section is modified by the movable grille (64) being displaced in relation to the fixed grille (62).

8. Vehicle (2, 38), comprising a cooling system (4) with a coolant channel (6), which has a coolant inlet opening (12) and a coolant outlet opening (16), wherein the cooling system (4) has a closing device (22, 58, 60) which is designed to modify an effective opening cross section of one of the openings (12, 16) of the coolant channel (6) in accordance with a cooling output of the cooling system (4), wherein the closing device (22, 58, 60) is arranged at the coolant inlet opening (12), **characterized in that** the cooling system (4) has a further closing device (22, 58, 60), which is arranged at the coolant outlet opening (16).

9. Vehicle (2, 38) according to Claim 8,
**characterized in that** the closing device (22, 58, 60) is designed as a louvre unit with multiple pivotably mounted louvres (32).

10. Vehicle (2, 38) according to Claim 8,
**characterized in that** the closing device (22, 58, 60) is designed as a sliding grille unit with a fixed grille (62) and a movable grille (64).

11. Vehicle (2, 38) according to one of Claims 8 to 10,
**characterized in that** the cooling system (4) has a fan (20) and an air-cooled heat exchanger (24), which are arranged in the coolant channel (6).

12. Vehicle (2, 38) according to one of Claims 8 to 11,
**characterized in that** the cooling system (4) has an adjusting spring (26) and a damping device (28), which are respectively connected to the closing device (22, 58, 60), wherein a position of the closing device (22, 58, 60) is dependent on an expansion of the adjusting spring (26).

13. Vehicle (2, 38) according to one of Claims 8 to 12,
**characterized in that** the cooling system (4) has a lever unit (40) with a lever arm (44) and a coolant cylinder (42), wherein a piston (46) that is connected to the lever arm (44) is arranged in the coolant cylinder (42), the coolant cylinder (42) is connected by at least one coolant line (54, 56) to the coolant channel (6) and a position of the closing device (22, 58, 60) is dependent on a position of the lever arm (44).

## Revendications

1. Procédé pour faire fonctionner un véhicule (2, 38), comprenant un système (4) de refroidissement ayant un conduit (6) pour du fluide de refroidissement qui a une ouverture (12) d'entrée du fluide de refroidissement et une ouverture (16) de sortie du fluide de refroidissement, le système (4) de refroidissement ayant un dispositif (22, 58, 60) de fermeture et à l'aide du dispositif (22, 58, 60) de fermeture, pendant la marche du véhicule (2, 38), une section transversale efficace d'ouverture de l'une des ouvertures (12, 16) du conduit (6) pour du fluide de refroidissement est modifiée en fonction d'une puissance de refroidissement du système (4) de refroidissement,
dans lequel la section transversale efficace d'ouverture, qui est modifiée à l'aide du dispositif (22, 58, 60) de fermeture, est une section transversale efficace d'ouverture de l'ouverture (12) d'entrée du fluide de refroidissement, **caractérisé en ce que** le système (4) de refroidissement a un autre dispositif (22, 28, 60) de fermeture, au moyen duquel, pendant la marche du véhicule (2, 38), une section transversale efficace d'ouverture de l'ouverture (16) de sortie du fluide de refroidissement est modifiée en fonction de la puissance de refroidissement du système (4) de refroidissement.

2. Procédé suivant la revendication 1,
**caractérisé en ce que** le système (4) de refroidissement a un ventilateur (20) monté dans le conduit (6) pour du fluide de refroidissement, la section transversale efficace d'ouverture augmentant, si la puissance du ventilateur augmente, et diminuant, si la puissance du ventilateur diminue.

3. Procédé suivant la revendication 2,
**caractérisé en ce qu'**en arrêtant le ventilateur (20), on met le dispositif (22, 58, 60) de fermeture dans une position, dans laquelle une entrée d'un fluide de refroidissement dans le conduit (6) pour du fluide de refroidissement par ladite ouverture (12, 16) et/ou une sortie du fluide de refroidissement du conduit (6) pour du fluide de refroidissement par ladite ouverture (12, 16) est supprimée.

4. Procédé suivant l'une des revendications précédentes,
**caractérisé en ce que** la section transversale efficace d'ouverture dépend d'une position du dispositif (22, 58, 60) de fermeture, la position du dispositif (22, 58, 60) de fermeture étant réglée en utilisant une différence de pression entre une première pression, régnant dans le conduit (6) pour du fluide de refroidissement et dépendant de la puissance du ventilateur, et une deuxième pression.

5. Procédé suivant la revendication 4,
**caractérisé en ce que** la deuxième pression est une pression régnant dans le conduit (6) pour du fluide de refroidissement, qui dépend de la puissance du ventilateur, ou **en ce que** la deuxième pression est une pression à l'extérieur du conduit (6) pour du fluide de refroidissement.

6. Procédé suivant l'une des revendications précédentes,
**caractérisé en ce que** le dispositif (22, 58, 60) de fermeture est conformé en unité à lamelles ayant plusieurs lamelles (32) et on modifie la section transversale efficace d'ouverture par un mouvement de pivotement des lamelles (32).

7. Procédé suivant l'une des revendications 1 à 6, **caractérisé en ce que** le dispositif (22, 58, 60) de fermeture est conformé en unité à grilles coulissantes ayant une grille (62) fixe et une grille (64) mobile et on modifie la section transversale efficace d'ouverture en faisant coulisser la grille (64) mobile par rapport à la grille (62) fixe.

8. Véhicule (2, 38), comprenant un système (4) de refroidissement ayant un conduit (6) pour du fluide de refroidissement, qui a une ouverture (12) d'entrée de fluide de refroidissement et une ouverture (16) de sortie de fluide de refroidissement,
dans lequel le système (4) de refroidissement a un dispositif (22, 58, 60) de fermeture, qui est conçu pour faire varier la section transversale efficace d'ouverture de l'une des ouvertures (12, 16) du conduit (6) pour du fluide de refroidissement, en fonction d'une puissance de refroidissement du système (4) de refroidissement,
dans lequel le dispositif (22, 58, 60) de fermeture est monté sur l'ouverture (12) d'entrée du fluide de refroidissement,
**caractérisé en ce que**
le système (4) de refroidissement a un autre dispositif (22, 58, 60) de fermeture, qui est monté sur l'ouverture (16) de sortie de fluide de refroidissement.

9. Véhicule (2, 38) suivant la revendication 8,
**caractérisé en ce que** le dispositif (22, 58, 60) de fermeture est conformé sous la forme d'une unité à lamelles ayant plusieurs lamelles (32) montées tournantes.

10. Véhicule (2, 38) suivant la revendication 8,
**caractérisé en ce que** le dispositif (22, 58, 60) de fermeture est conformé sous la forme d'une unité à grilles coulissantes ayant une grille (62) fixe et une grille (64) mobile.

11. Véhicule (2, 38) suivant l'une des revendications 8 à 10, **caractérisé en ce que** le système (4) de refroidissement a un ventilateur (20) et un échangeur de chaleur (24) à refroidissement par de l'air, qui sont montés dans le conduit (6) pour du fluide de refroidissement.

12. Véhicule (2, 38) suivant l'une des revendications 8 à 11, **caractérisé en ce que** le système (4) de refroidissement a un ressort (26) de réglage et un dispositif (28) d'amortissement, qui sont reliés chacun au dispositif (22, 58, 60) de fermeture, une position du dispositif (22, 58, 60) de fermeture dépendant d'un allongement du ressort (26) de réglage.

13. Véhicule (2, 38) suivant l'une des revendications 8 à 12, **caractérisé en ce que** le système (4) de refroidissement a une unité (40) de levage, ayant un bras (44) de levage et un cylindre (42) pour du fluide de refroidissement, dans lequel, dans le cylindre (42) pour du fluide de refroidissement, est disposé un piston (46) relié au bras (44) de levage, le cylindre (42) pour du fluide de refroidissement communiquant avec le conduit (6) pour du fluide de refroidissement par au moins une ligne (54, 56) pour du fluide de refroidissement et une position du dispositif (22, 28, 60) de fermeture dépendant d'une position du bras (44) de levage.
